# EUROPÄISCHE PATENTSCHRIFT

(11) **EP 2 467 992 B1**
(45) Veröffentlichungstag und Bekanntmachung des Hinweises auf die Patenterteilung: **01.05.2013**
(21) Anmeldenummer: 10742731.2
(22) Anmeldetag: 29.07.2010
(51) Int. Cl.: H04L 29/08, G07C 5/00

(54) **VERFAHREN ZUR KONFIGURATION VON INFOTAINMENTANWENDUNGEN IN EINEM KRAFTFAHRZEUG**
METHOD FOR CONFIGURING INFOTAINMENT APPLICATIONS IN A MOTOR VEHICLE
PROCÉDÉ POUR CONFIGURER DES APPLICATIONS D'INFORMATION-DIVERTISSEMENT DANS UN VÉHICULE AUTOMOBILE

(30) Priorität: 19.08.2009 DE 102009038035
(43) Veröffentlichungstag der Anmeldung: 27.06.2012
(73) Patentinhaber: Bayerische Motoren Werke Aktiengesellschaft, 80809 München (DE)
(72) Erfinder: ZIMMERMANN, Sebastian, 80798 München (DE); SMIRNOV, Mikhail, 85774 Unterföhring (DE)
(86) Internationale Anmeldenummer: PCT/EP2010/004638
(87) Internationale Veröffentlichungsnummer: WO 2011/020542

(56) Entgegenhaltungen:
- US-A1- 2003 097 211
- US-A1- 2004 255 037
- US-A1- 2006 036 356
- US-A1- 2007 021 844
- US-A1- 2008 147 245

## Beschreibung

Die Erfindung betrifft ein Verfahren zur Konfiguration von Infotainmentanwendungen in einem Kraftfahrzeug.

Aus der DE 100 44 917 A1 ist ein Verfahren zur Nutzung von Funktionen und Leistungsmerkmalen in einem Kraftfahrzeug bekannt, bei dem das Kraftfahrzeug hardwaremäßig zur Ausnutzung aller Funktionen mit maximalen Leistungsmerkmalen ausgebildet ist, wobei softwaremäßig Funktionen sperrbar und/oder Leistungsmerkmale drosselbar sind, wobei ein Nutzer eines Kraftfahrzeuges temporär oder dauerhaft Funktionen oder Leistungsmerkmale anfordern kann, die dann temporär oder dauerhaft softwaremäßig freigeschaltet werden.

Aus der WO 02/17184 A1 ist ein Total Fleet Logistics"-System bekannt. Dieses System erlaubt die Durchführung einer Fahrzeugdiagnose, Fahrzeugüberwachung, Fahrzeugkonfiguration und Fahrzeugprogrammierung durch beispielsweise einen Flottenbetreiber über das Internet.

Aus der US 2006/036356 ist ein Verfahren zur Veränderung der Konfigurationsdaten eines Fahrzeugs offenbart.

Aus dem Stand der Technik sind jedoch keine zufrieden stellenden Lösungen für die Konfiguration von Infotainmentanwendungen in Kraftfahrzeugen eines Flottenverbunds bekannt. Die hierzu bekannten Verfahren beschränken sich in der Regel auf schriftliche Anweisungen des Flottenbetreibers an die Nutzer der einzelnen Flottenfahrzeuge.

Es ist eine Aufgabe der Erfindung, ein verbessertes Verfahren zur Konfiguration von Infotainmentanwendungen in den Kraftfahrzeugen einer Fahrzeugflotte anzugeben.

Gelöst wird diese Aufgabe durch ein Verfahren gemäß Anspruch 1. Vorteilhafte Ausführungsformen und Weiterbildungen der Erfindung ergeben sich aus den abhängigen Ansprüchen.

Ausgegangen wird kraftfahrzeugseitig von einem Kraftfahrzeug mit zumindest einer Infotainmentanwendung und mit einem Steuergerät, welches an der zumindest einen Infotainmentanwendung beteiligt ist. Der Begriff Infotainment ist im Zusammenhang mit einem Kraftfahrzeug zu verstehen als Überbegriff über die Bereiche Information, Kommunikation und Unterhaltung (Entertainment). Unter einer Infotainmentanwendung eines Kraftfahrzeugs sind somit zu verstehen Anwendungen im Zusammenhang mit Navigation, Telefon, Telematik, Radio, Audio, Video, Email, Internet sowie zukünftige Weiterentwicklungen, Supplemente und/oder Substitutionen solcher Anwendungen.

Das Steuergerät, welches an der zumindest einen Infotainmentanwendung beteiligt ist, verfügt über eine Konfigurationsschnittstelle, über welche es derart konfigurierbar ist, dass der Funktionsumfang und/oder eine Grundeinstellung der Infotainmentanwendung verändert wird. Eine Veränderung des Funktionsumfangs der Infotainmentanwendung kann beispielsweise bestehen in der Freischaltung einer Navigationsfunktion, in der Freischaltung eines Intranet-Dienstes oder in der Freischaltung einer TV-Funktion auch bei fahrendem Kraftfahrzeug. Eine Veränderung einer Grundeinstellung der Infotainmentanwendung kann beispielsweise bestehen in der Festlegung einer Heimatadresse für ein Navigationssystem, in der Parametrierung eines Email-Accounts oder in der Konfiguration eines Intranetzugangs.

Bereitgestellt wird kraftfahrzeugseitig ferner ein gerätetechnisch von dem Steuergerät getrennter erster Konfigurationsdatenserver mit einer zugehörigen ersten Konfigurationsdatenbank zur fahrzeugbezogenen Speicherung von Konfigurationsdaten.

Entfernt von dem Kraftfahrzeug wird stationär bei einer Servicezentrale ein zweiter Konfigurationsdatenserver bereitgestellt mit einer zugehörigen zweiten Konfigurationsdatenbank zur zentralen Speicherung von Konfigurationsdaten. Zwischen dem ersten und dem zweiten Konfigurationsdatenserver besteht eine drahtlose Kommunikationsverbindung.

Die Servicezentrale kann beispielsweise von einem Fahrzeughersteller bzw. OEM betrieben werden und/oder räumlich bei diesem angeordnet sein.

Die Konfigurationsdaten der zweiten Konfigurationsdatenbank sind über zumindest zweierlei Modifikationsschnittstellen konfigurierbar. Ein wesentlicher Unterschied der zumindest zwei Modifikationsschnittstellen besteht in den Zugriffsrechten, die einem über die jeweilige Modifikationsschnittstelle auf die zweite Konfigurationsdatenbank Zugreifenden beim Zugriff eingeräumt werden. Über eine erste Modifikationsschnittstelle sind die Konfigurationsdaten der zweiten Konfigurationsdatenbank mit ersten Zugriffsrechten modifizierbar, über eine zweite Modifikationsschnittstelle sind die Konfigurationsdaten der zweiten Konfigurationsdatenbank mit zweiten Zugriffsrechten modifizierbar, die sich von den ersten Zugriffsrechten unterscheiden.

Die erste Modifikationsschnittstelle ist vorzugsweise nicht internetbasiert ausgeführt. Vorzugsweise ist sie leitungsgebunden ausgeführt und vorzugsweise kann nur von einer ganz bestimmten Recheneinheit und/oder von einer begrenzten Anzahl von Recheneinheiten, beispielsweise von allen Recheneinheiten in einem lokalen leitungsgebundenen Netzwerk, über die erste Modifikationsschnittstelle auf die zweite Konfigurationsdatenbank zugegriffen werden. Vorzugsweise ist die erste Modifikationsschnittstelle alternativ oder zusätzlich nur bei Verfügbarkeit und Nutzung entsprechender erster Zugangsdaten zugänglich. Die erste Modifikationsschnittstelle eignet sich somit insbesondere für Modifikationen der zweiten Konfigurationsdatenbank durch einen Fahrzeughersteller bzw. OEM.

Der Vollständigkeit halber sei angemerkt, dass die erste Modifikationsschnittstelle grundsätzlich auch internetbasiert ausgeführt sein kann - selbst dann, wenn sie in erster Linie für Modifikationen der zweiten Konfigurationsdatenbank durch einen Fahrzeughersteller bzw. OEM bereitgestellt ist und wenn die Servicezentrale räumlich bei dem Fahrzeughersteller bzw. OEM angeordnet ist.

Die zweite Modifikationsschnittstelle ist internetbasiert ausgeführt. Vorzugsweise ist sie auf Basis an sich bekannter Web- und/oder Client/Server-Technologien ausgeführt. Gemäß einer bevorzugten Ausführungsform der Erfindung kann bei Verfügbarkeit entsprechender zweiter Zugangsdaten von einem konventionellen mit dem Internet verbundenen PC auf die zweite Modifikationsschnittstelle zugegriffen werden. Die zweite Modifikationsschnittstelle eignet sich somit insbesondere für Modifikationen der zweiten Konfigurationsdatenbank durch einen Flottenbetreiber.

Die ersten Zugriffsrechte und die zweiten Zugriffsrechte können disjunkt festgelegt sein, d.h. derart, dass von einem über die erste Modifikationsschnittstelle Zugreifenden völlig andere Zugriffe möglich sind als einem über die zweite Modifikationsschnittstelle Zugreifenden. Es kann jedoch auch eine gewisse Schnittmenge bzw. ein gewisser Überlapp der Zugriffsrechte bestehen.

Gemäß einer bevorzugten Ausführungsform der Erfindung wird zusätzlich noch eine dritte, ebenfalls internetbasierte Modifikationsschnittstelle der zweiten Konfigurationsdatenbank bereitgestellt, über welche Konfigurationsdaten der zweiten Konfigurationsdatenbank mit dritten Zugriffsrechten, die sich abermals von den ersten und zweiten Zugriffsrechten unterscheiden, modifizierbar sind. Die dritte Modifikationsschnittstelle eignet sich somit für Modifikationen der zweiten Konfigurationsdatenbank durch die Nutzer von Flottenfahrzeugen und/oder Dienstanbieter und/oder Anwendungsanbieter. Eine solche Modifikationsschnittstelle kann aber auch einer der genannten Nutzergruppen vorbehalten bleiben, während für die anderen Nutzergruppen eigene internetbasierte Modifikationsschnittstellen mit eigenen Zugriffsrechten bereitgestellt werden. Auch die dritte Modifikationsschnittstelle und ggf. weitere Modifikationsschnittstellen ist vorzugsweise durch entsprechende Zugangsdaten gesichert.

Eventuelle Modifikationen der Konfigurationsdaten der zweiten Konfigurationsdatenbank werden entweder seitens der Servicezentrale und/oder seitens des mit der Servicezentrale kommunizierenden Kraftfahrzeugs erkannt. Möglich ist es beispielsweise, ein Erkennen von Modifikationen der Konfigurationsdaten der zweiten Konfigurationsdatenbank derart zu implementieren, dass die Konfigurationsdaten nach einem Zugriff über eine der Modifikationsschnittstellen als verändert gelten. Es kann aber beispielsweise auch geprüft werden, ob tatsächlich verändernde Zugriffe vorgenommen worden sind und/oder es kann der Datenstand mit einem früheren Datenstand auf Veränderungen abgeglichen werden.

Regelmäßig (z.B. zyklisch), zu festgelegten Zeitpunkten und/oder auf das Erkennen einer Veränderungen des Datenstands der Konfigurationsdaten der zweiten Konfigurationsdatenbank hin (d.h. gewissermaßen "in Antwort" auf das Erkennen) werden über die drahtlose Kommunikationsverbindung zwischen dem ersten und dem zweiten Konfigurationsdatenserver Konfigurationsdaten der ersten Konfigurationsdatenbank verändert. Dies geschieht anhand von Konfigurationsdaten aus der zweiten Konfigurationsdatenbank, vorzugsweise lediglich anhand zuvor geänderter Konfigurationsdaten aus der zweiten Konfigurationsdatenbank. Dementsprechend werden vorzugsweise nicht sämtliche, sondern nur ausgewählte Konfigurationsdaten der ersten Konfigurationsdatenbank verändert, insbesondere diejenigen Konfigurationsdaten der ersten Konfigurationsdatenbank, die in inhaltlichem Zusammenhang mit zuvor veränderten Konfigurationsdaten der zweiten Konfigurationsdatenbank stehen.

Anhand der so geänderten Konfigurationsdaten aus der ersten Konfigurationsdatenbank wird schließlich über die Konfigurationsschnittstelle des Steuergeräts der Funktionsumfangs und/oder eine Grundeinstellung der Infotainmentanwendung verändert. Auch dies kann entweder regelmäßig (z.B. zyklisch), zu festgelegten Zeitpunkten und/oder auf das Erkennen einer Veränderungen des Datenstands der Konfigurationsdaten der ersten Konfigurationsdatenbank hin (d.h. gewissermaßen "in Antwort" auf das Erkennen) geschehen.

Vorzugsweise wird eine Grundeinstellung der Infotainmentanwendung verändert und es handelt sich bei der Grundeinstellung um eine auf die Verwaltung von Personal-Information-Management-Daten bezogene Grundeinstellung. Dementsprechend handelt es sich bei der Infotainmentanwendung vorzugsweise um eine Anwendung, die - zumindest unter anderem - Personal-Information-Management-Daten verwaltet, z.B. einen Email-Client.

Unter dem mittlerweile in Fachkreisen etablierten Begriff "Personal-Information-Management-Daten" sind vorliegend elektronisch vorliegende persönliche Daten zu verstehen wie Kontakte, Termine, Aufgaben, Notizen, Dokumente wie Briefe, Faxe, SMS, Emails, RSS-Feeds, sowie heutige Entsprechungen, zukünftige Weiterentwicklungen, Supplemente und/oder Substitutionen solcher Daten.

Vorzugsweise werden auf die beschriebene Art und Weise solche Veränderungen des Funktionsumfangs und/oder der Grundeinstellung der Infotainmentanwendung vorgenommen, die nicht durch im Kraftfahrzeug verfügbare Bedienmittel, insbesondere nicht die "herkömmlichen Bedienmittel" (Drucktasten, Touchpad, Tastatur, Druck-/Dreh-Controller usw.) des Kraftfahrzeugs, durchführbar sind.

Gegebenenfalls können vorgenommene Festlegungen des Funktionsumfangs und/oder der Grundeinstellung aber unter Zuhilfenahme von im Kraftfahrzeug verfügbaren Bedienmittel anzeigbar sein. Wird beispielsweise auf die beschriebene Art und Weise ein Email-Client konfiguriert, so können die Einstellungen (Email-Server, Account-Name, ...) für einen Fahrzeuginsassen auf einer Anzeigeeinheit zwar darstellbar sein, jedoch nicht veränderbar.

Gemäß einer bevorzugten Ausführungsform der Erfindung sind über die drahtlose Kommunikationsverbindung zwischen Kraftfahrzeug und Servicezentrale Daten, insbesondere so genannte Certificate Signing Requests oder sonstige konfigurations- und authentisierungsrelevante Daten, durch den ersten Konfigurationsdatenserver beim zweiten Konfigurationsdatenserver hinterlegbar bzw. werden hinterlegt.

Solche Certificate Signing Requests zu einem lokal generierten, geheimen Schlüssel werden vorzugsweise zuvor von einem Steuergerät bei "seinen" d.h. der ihm zugeordneten Konfigurationsschnittstelle, und/oder bei dem Konfigurationsdatenserver hinterlegt.

In bestimmten Fällen wird der geheime Zugangsschlüssel im Fahrzeug generiert und verlässt dieses nie. Das Fahrzeug erzeugt einen "Certificate Signing Request", der den zugehörigen öffentlichen Schlüssel enthält. Dieser Certificate Signing Request muss von der für eine bestimmte Zugangsberechtigung relevanten "Certificate Authority" signiert und als Zertifikat wieder zurück in das Fahrzeug übertragen werden. Mit diesem Zertifikat und dem geheimen Schlüssel erhält die Fahrzeuganwendung dann den Zugriff auf beispielsweise die Unternehmensdaten.

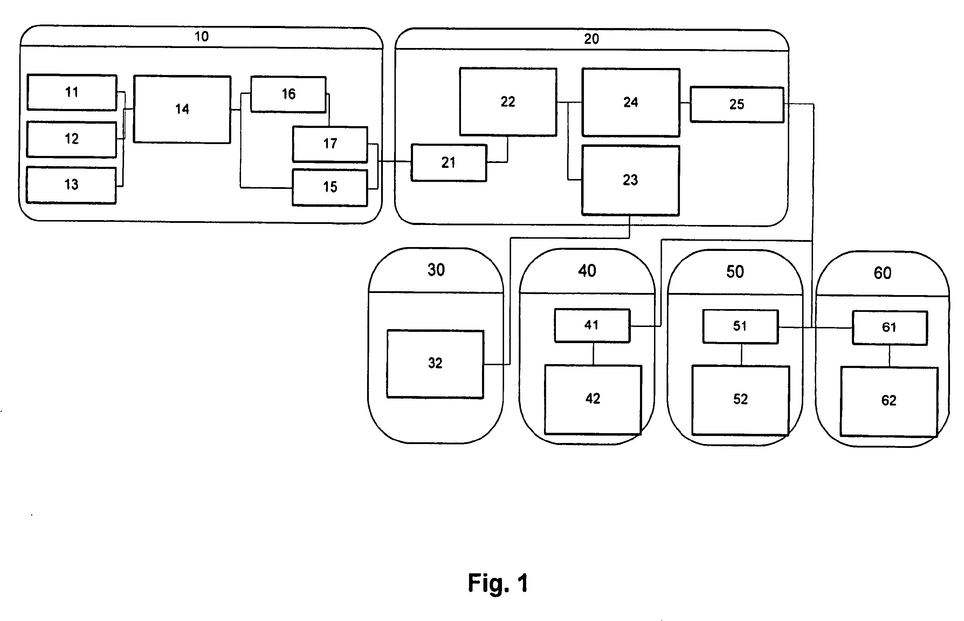

Im Folgenden wird anhand der einzigen beigefügten Zeichnung ein bevorzugtes Ausführungsbeispiel der Erfindung beschrieben. Daraus ergeben sich weitere Details, bevorzugte Ausführungsformen und Weiterbildungen der Erfindung. Dabei zeigt schematisch und beispielhaft
Fig. 1 die Architektur einer Vorrichtung zur Umsetzung des erfindungsgemäßen Verfahrens.

Gemäß Stand der Technik sind Funktionen im Bereich Information, Kommunikation und Entertainment (Überbegriff: Infotainment) in modernen Kraftfahrzeugen in der Regel unbeschränkt und ausschließlich vom jeweiligen Endnutzer konfigurierbar. Eine von wenigen Ausnahmen hiervon ist eine Sperre bestimmter Funktionen durch den Fahrzeughersteller z.B. in der Form, dass der Endnutzer zuerst einen Freischaltcode eingeben muss, bevor er die jeweilige Funktion nutzen kann.

Eine Konfiguration von Infotainmentanwendungen ist beispielsweise in der Form bekannt, dass dem Endnutzer die Möglichkeit gegeben wird, über Bedienmittel im Fahrzeug oder aus der Entfernung über ein Online-Portal einen Email-Client bzw. einen Zugang zu einem Email-Server zu konfigurieren.

Ein zufrieden-stellendes zentrales Management für die Konfiguration von Infotainment-Systemen, etwa durch einen Fuhrparkverantwortlichen, ist mit den Vorrichtungen und Verfahren nicht möglich. Auch können Funktionen der Infotainment-Systeme im Fahrzeug bislang in der Regel nicht durch Dritte beschränkt werden. Relevante Konfigurationsparameter sind heute in der Regel nur entweder über Kodierung, Freischaltung oder Provisionierung des Fahrzeuges veränderbar. Solche Prozesse können heute in der Regel nur vom Fahrzeughersteller genutzt werden und sind außerdem aus der Sicht der Fahrzeugkonfiguration sehr stark vom jeweiligen Markt bzw. Land abhängig.

Der Stand der Technik bzw. die oben genannten bekannten Verfahren und Vorrichtungen führen zu den folgenden nachteiligen Aspekten.

Ein erster Aspekt 1 betrifft die Konfiguration durch den Kunden bzw. Endnutzer:
Der Endnutzer wird mit der Aufgabe der korrekten Konfiguration der Infotainment-Systeme konfrontiert. Dies führt dazu, dass eine "korrekte" bzw. einheitliche Konfiguration über alle Fahrzeuge einer Fahrzeugflotte hinweg kaum bzw. nicht sicherzustellen ist. Hinzu kommt, dass über das Fahrzeug gegebenenfalls auch ein Zugriff auf Firmenressourcen erfolgen soll, z.B. bei Firmenwagen und -fuhrparks. Dabei agiert das Fahrzeug oder ein gegebenenfalls vom Fahrzeughersteller betriebenes Backend grundsätzlich als ein eigenständiges Gerät, ist also nicht Teil der IT-Infrastruktur des kundenseitigen (die Fahrzeugflotte nutzenden) Unternehmens. Um eine funktionierende Konfiguration in allen bzw. möglichst vielen Fahrzeugen der Fahrzeugflotte zu gewährleisten, muss also das IT-Management des kundenseitigen Unternehmens alle Endnutzer (z.B. Beschäftigte des kundenseitigen Unternehmens) in die korrekte Konfiguration einweisen. Dabei müssen gegebenenfalls auch Geheimnisse ausgetauscht werden (z.B. Benutzerkennungen, Passwörter, geheime Schlüssel und Zertifikate), die auch missbräuchlich genutzt werden könnten. Das kundenseitige Unternehmen verliert also nach dem Stand der Technik die Kontrolle über solche Geheimnisse. Ferner hat das kundenseitige Unternehmen keine Kontrolle über die Konfiguration der eingesetzten IT-Systeme im Fahrzeug und im Backend.

Mit der zunehmenden Verbreitung und Ausweitung so genannter Personal-Information-Management (PIM)-Funktionalitäten in den Infotainment-Systemen moderner Kraftfahrzeuge werden zunehmend personenbezogene Daten verarbeitet, die in der Regel vertraulich sind. Sind diese PIM-Daten unternehmensbezogen, z.B. geschäftliche Emails oder Termine, ist eine Verarbeitung in unternehmensextemen Geräten in der Regel nicht gestattet. Dadurch kann es zu der paradoxen Situation kommen, dass die Fahrzeug-Infotainment-Systeme zwar technisch einwandfreie PIM-Funktionen bereitstellen, dass diese aber wegen der fehlenden Kontrolle durch das kundenseitige Unternehmen schließlich vom Endnutzer nicht genutzt werden dürfen.

Ein zweiter Aspekt betrifft die (gemäß Stand der Technik oft fehlende) Möglichkeit, Funktionen zu beschränken:
In Bezug auf informationstechnische Systeme in Unternehmen (und außerhalb von Kraftfahrzeugen) ist es heute üblich, dass das IT-Management des Unternehmens Vorgaben hinsichtlich der Nutzung und Konfiguration dieser Geräte macht, und diese auch in Form von Sicherheitsrichtlinien und Policies technisch durchsetzt.
Zufrieden stellende Möglichkeiten, Entsprechendes bei Fahrzeug-Infotainment-Systemen zu tun, bestehen bislang nicht. So kann ein kundenseitiges Unternehmen oder ein Fahrzeugvermieter keine Einschränkungen und Vorgaben hinsichtlich der Konfiguration und der Nutzung der Informations-, Kommunikations- und Entertainment-Funktionen des Fahrzeugs machen.
Zwar machen kundenseitige Unternehmen gegenüber einem Fahrzeughersteller inzwischen häufig Vorgaben für Fuhrparkfahrzeuge und fordern Beschränkungen in den Funktionen, z.B. dahingehend, welche Funktionen während der Fahrt bedient werden können. Der Fahrzeughersteller kann darauf aber heute nur mit verhältnismäßig hohem Aufwand reagieren, nämlich indem er entweder eine entsprechende Beschränkung individuell für einzelne oder alle Fahrzeuge herstellt, die an das jeweilige kundenseitige Unternehmen geliefert werden oder es wird eine entsprechende Beschränkung sogar für alle Kunden übernommen. Wesentlich vorteilhafter wäre es demgegenüber, wenn stattdessen ein Fuhrparkverantwortlicher bzw. das IT-Management des kundenseitigen Unternehmen selbst Beschränkungen im Fahrzeug konfigurieren könnte.
Auch Geschäftsmodelle ließen sich an eine entsprechende Konfigurierbarkeit knüpfen. Mietwagenfirmen können derzeit Zusatzfunktionen nicht separat abrechnen, z.B. die Nutzung eines Navigationssystems. Dem Kunden wird daher entweder ein Fahrzeug mit oder ohne Navigationssystem angeboten. Auf Basis des vorgestellten Verfahrens könnte eine Navigationsanwendung durch die Mietwagenfirma bei Bedarf freigeschaltet werden.

Ein dritter Aspekt 3 betrifft einen policybasierten Software-Verkauf bzw. eine policybasierte Software-Vermietung für Fahrzeugfunktionen:
Aufgrund der gemäß Stand der Technik sehr eingeschränkten Möglichkeiten, softwarebasierte Fahrzeugfunktionen zu aktivieren bzw. zu deaktivieren, ist es heute in der Regel nicht möglich, einem Endnutzer eine bestimmte Funktion bzw. Anwendung nur für eine begrenzte Zeit zur Verfügung zu stellen. Auf Basis des vorgestellten Verfahrens würde es möglich, eine Navigationsanwendung beispielsweise für den Zeitraum einer Urlaubsreise oder Geschäftsreise zu mieten (aus Sicht des Kunden) bzw. freizuschalten (aus Sicht des kundenseitigen Unternehmens und/oder aus Sicht des Fahrzeugherstellers).

Das vorgestellte Verfahren ermöglicht eine aus der Entfernung vornehmbare, zentrale Konfiguration der Informations-, Kommunikations- und Entertainmentsysteme des Kraftfahrzeugs z.B. durch das IT-Management eines Unternehmens, durch einen Serviceanbieter, durch einen Fuhrparkbetreiber, durch einen Mietwagenverleiher oder durch einen Fahrzeughersteller bzw. dessen Händlernetz. Der Endnutzer des Fahrzeugs wird von dieser Aufgabe entlastet.

Das vorgestellte Verfahren ermöglicht ferner eine Beschränkung der Funktionalität oder Konfigurationseinstellungen in den Informations-, Kommunikations- und Entertainmentsystemen im Fahrzeug durch den Einsatz von Richtlinien und Policies durch eine berechtigte Stelle, z.B. das IT-Management eines Unternehmens, durch einen Serviceanbieter, durch einen Fuhrparkbetreiber, durch einen Mietwagenverleiher oder durch einen Fahrzeughersteller. Ein Mietwagenverleiher und/oder ein Fahrzeughersteller kann bestimmte Funktionen somit gegen Aufpreis bereitstellen oder ansonsten beschränken.

Kundenseitigen Unternehmen wird es auf Basis des vorgestellten Verfahrens möglich, die Informations-, Kommunikations- und Entertainment-Systeme des Kraftfahrzeugs als Teil der IT-Infrastruktur des kundenseitigen Unternehmens zu behandeln. Der Zugang zu vertraulichen Firmenressourcen, z.B. Email-Server, Intranet, Terminkalender, VPN usw. kann somit durch das Unternehmen selbst konfiguriert und beschränkt werden.

Eine bevorzugte technische Vorrichtung bzw. Architektur zur Realisierung der Erfindung ist schematisch wie folgt aufgebaut: (vgl. Fig. 1)

Im Bordnetz des Kraftfahrzeugs 10 ist zumindest ein elektronisches Steuergerät, gegebenenfalls auch mehrere elektronische Steuergeräte (in Fig. 1 sind es genau drei Steuergeräte), mit einem "Configuration and Policy Client" 11, 12, 13 ausgestattet, über den die vom jeweiligen Steuergerät bereitgestellten Funktionen konfiguriert oder beschränkt werden. So kann beispielsweise die Navigation so eingestellt werden, dass eine Zieleingabe nur im Stand möglich ist, oder die Email-Applikation kann korrekt konfiguriert werden.

Die Konfigurationsdaten und Richtlinien/Policies bezieht der "Configuration and Policy client" von einem (fahrzeug-)zentralen, in einem elektronischen Steuergerät im Fahrzeug implementierten "In-vehicle configuration and policy server and database" 14, in dem alle Konfigurationen und Richtlinien/Policies zentral bereitgestellt werden.

Gemäß einer optionalen, jedoch bevorzugten, Ausprägung des vorgestellten Verfahrens können ein oder mehrere Steuergeräte im Bordnetz des Kraftfahrzeugs 10 einen "Certificate Signing Request" zu einem lokal generierten, geheimen Schlüssel im "Configuration und Policy Client" 11, 12, 13 hinterlegen. Der folgende Use Case wird somit auf Basis der in Fig. 1 dargestellten Infrastruktur umsetzbar: Der geheime Schlüssel wird im Fahrzeug generiert. Dazu wird ein Certificate Signing Request generiert, der an eine außerhalb des Fahrzeugs befindliche Certificate Authority (CA) - dies kann insbesondere die CA des Fahrzeugherstellers sein - übertragen, dort signiert und anschließend als signiertes Zertifikat zurück in das Fahrzeug übertragen werden muss.

Der "Configuration and Policy client" 11, 12, 13 aktualisiert regelmäßig die relevanten Konfigurations- und Policy-Daten von diesem "In-vehicle configuration and policy server and database" 14. Umgekehrt kann bei einer Aktualisierung der Daten im "In-vehicle configuration and policy server and database" 14 auch eine Benachrichtigung der Clients 11, 12, 13 über die Änderung erfolgen. Dies kann als "Configuration- and Policy-Push" bezeichnet werden.

Gemäß einer weiteren optionalen, jedoch bevorzugten, Ausprägung des vorgestellten Verfahrens kann der "Configuration and Policy client" 11, 12, 13 Informationen im "In-vehicle configuration and policy server and database" 14 hinterlegen, z.B. "Certificate Signing Requests" oder sonstige, konfigurations- und authentisierungsrelevante Daten.

Über gängige kryptographische Verfahren ist optional sichergestellt, dass die Konfigurations-und Richtliniendaten vertraulich, authentisch und/oder frei von Manipulationen sind.

Über ein im Fahrzeug verbautes Kommunikationsgerät (z.B. GSM-, GPRS-, UMTS-, Wimax-, WLAN- oder LTE-Modul) 15 oder über ein vom Endnutzer eingebrachtes (und über eine entsprechende Schnittstelle "CE device interface" 16 angeschlossenes) Consumer Electronics (CE) Gerät (oder auch Portable Communication Device) 17 kommuniziert das "In-vehicle configuration and policy server and database" 14 mit einem Backend, dem "Configuration and policy backend" 20. Kernkomponente des Backends 20 ist das "Backend configuration and policy server and database" 22, in dem alle relevanten Konfigurations- und Richtliniendaten abgelegt sind. Die Kommunikation erfolgt über eine drahtlose Kommunikationsverbindung zwischen dem Kommunikationsgerät 15 bzw. dem CE-Gerät 17 und einem mit dem "Backend configuration and policy server and database" 22 verbundenen Kommunikationsgerät 21.

Im Gegensatz zum Fahrzeugsystem 10 steht das Backend 20 ständig zur Verfügung und kann mehrere Fahrzeuge bedienen. Im "Backend configuration and policy server and database" 22 liegen zentral die Konfigurations- und Policy-Daten, die in regelmäßigen Zyklen durch den "In-vehicle configuration and policy server and database" 14 abgerufen werden, indem Änderungen in das Fahrzeug 10 übertragen werden.

Gemäß einer weiteren optionalen, jedoch bevorzugten, Ausprägung des vorgestellten Verfahrens kann die "In-vehicle configuration and policy server and database" 14 eventuell (s.o.) dort hinterlegte Daten, z.B. "Certificate Signing Requests" oder sonstige, konfigurations-und authentisierungsrelevante Daten, im "Backend configuration and policy server and database" aktualisieren oder hinzufügen.

Über gängige kryptographische Verfahren ist optional sichergestellt, dass die Konfigurations-und Richtliniendaten vertraulich, authentisch und/oder frei von Manipulationen sind.

Zu den im "Backend configuration and policy server and database" 22 hinterlegten Daten können u.a. gehören:
- Einstellungen, z.B. Konfiguration von Email-Konten, Benutzerinformationen wie Email-Adressen, Favoriten, Bookmarks, Navigations-Ziele, Bildschirmhintergründe, Personalisierungen, Senderlisten, Nachrichtenkanäle usw.
- Authentisierungsdaten, z.B. Benutzernamen und Passwörter, geheime Schlüssel, Zertifikate (z.B. für Certificate Based Authentication, z.B. beim Abruf von Unternehmens-Emails) usw.
- "Certificate Signing Requests", die von Teilnehmern des Bordnetzes des Kraftfahrzeugs generiert wurden und an eine Certificate Authority (CA) des Fahrzeugherstellers und/oder eines berechtigten Dritten übertragen werden müssen.
- Richtlinien und Policies, z.B. Beschränkungen von bestimmten Funktionen in bestimmten Situationen, Beschränkungen hinsichtlich Parametern wie Geschwindigkeit oder Ort oder Zeit oder Nutzungshäufigkeit, Beschränkungen hinsichtlich Kommunikationspartnern, Beschränkungen von Import- /Exportschnittstellen, Vorgaben hinsichtlich Passwortqualität, Häufigkeit der Änderung des Passworts für den Zugriff auf Informationen (z.B. Unternehmens-Emails), Vorgaben hinsichtlich Auto-Löschung von Datenspeichern im Fahrzeug nach falscher Passworteingabe usw., Vorgaben hinsichtlich Bindung an einen bestimmten Fahrzeugschlüssel usw.
- Berechtigungen, z.B. Freischaltungen von Fahrzeugschlüsseln für ein Fahrzeug, oder Ersatz der Funktion des Fahrzeugschlüssels durch andere Zugangsschlüssel, z.B. Benutzemame und Passwort.
- Vom Fahrzeug auszuführende Befehle zum Schutz der IT-Infrastruktur des Unternehmens, wenn von missbräuchlicher Nutzung, z.B. nach Diebstahl des Fahrzeugs, auszugehen ist, z.B. Löschung der im Fahrzeug abgespeicherten Daten wie E-Mails, Telefonbücher etc. und Zugriffsberechtigungen/Geheimnisse.

Die im "Backend configuration and policy server and database" 22 hinterlegten Daten können vom Fahrzeughersteller 30 und/oder von einem berechtigten Dritten 40, 50, 60 über ein "Policy Configuration User Interface" 23, 24 bearbeitet werden.

Es kann für Zugriffe des Fahrzeugherstellers 30 ein gesondertes erstes "Policy Configuration User Interface" 23 für speziell vom Fahrzeughersteller konfigurierbare Policies ("vendor configurable policies") bereitgestellt sein. Das Interface 23 ist im vorliegenden Fall nicht internetbasiert ausgeführt. Der Zugriff kann insbesondere basierend auf können Web- oder Client-/Server-Technologien erfolgen. Beim Fahrzeughersteller wird dazu ein "Policy Configuration User Interface Client" 32 ausgeführt.

Für den, vorzugsweise internetbasierten, Zugriff berechtigter Dritter kann ein gesondertes zweites "Policy Configuration User Interface" 24 für speziell von berechtigten Dritten 40, 50, 60, insbesondere Endkunden, konfigurierbare Policies ("user configurable policies") bereitgestellt sein. Hierbei können Web- oder Client-/Server-Technologien zum Einsatz kommen. Bei jedem berechtigten Dritten 40, 50, 60 wird dazu ein "Policy Configuration User Interface Client" 42, 52, 62 ausgeführt. Für die Datenverbindung zwischen dem Backend 20 und den berechtigten Dritten 40, 50, 60 ist einerseits beim Backend 20 ein Kommunikationsgerät 25 vorgesehen, andererseits ist bei jedem berechtigten Dritten 40, 50, 60 ein Kommunikationsgerät 41, 51, 61 vorgesehen. Für den Zugriff können gängige Authentisierungs- und Verschlüsselungstechniken zum Einsatz kommen.

Bei berechtigten Dritten kann es sich insbesondere handeln um ein kundenseitiges Unternehmen 40, insbesondere dessen Fuhrpark-Management bzw. IT-Management, und/oder um einen Mietwagenverleiher.

Bei berechtigten Dritten kann es sich ferner handeln um Endnutzer 50. Endnutzer können ihrerseits entweder selbst Fahrzeugbesitzer sein (und somit keinen Weisungen oder Policies eines kundenseitigen Unternehmens unterliegen) oder es handelt sich um Mieter eines Mietwagens bzw. Mitarbeiter eines kundenseitiges Unternehmens (die Weisungen oder Policies eines kundenseitigen Unternehmens unterliegen).

Ferner kann es sich bei berechtigten Dritten handeln um andere so genannte "3rd Parties" 60, z.B. Dienstanbieter (Service Provider) oder Anwendungsanbieter (Application Provider).

Der Zugriff der verschiedenen Gruppen 40, 50, 60 berechtigter Dritter basiert im vorliegenden Beispiel zwar auf derselben Technologie und vergleichbarer Hardware. Jedoch werden den verschiedenen Gruppen 40, 50, 60 berechtigter Dritter vorzugsweise unterschiedliche Zugriffsrechte eingeräumt.

Abschließend werden wesentliche Vorteile des vorgestellten Verfahrens zusammengefasst und an beispielhaften Anwendungsszenarien erläutert.

Das vorgestellte Verfahren ermöglicht es einem Unternehmen, Kontrolle über die Informations-Kommunikations- und Entertainment-Funktionen des Fahrzeugs zu behalten. Bei Verfahren des Stands der Technik unterliegt die Kontrolle in der Regel komplett dem Fahrzeugnutzer. Diese Kontrolle ist eine Voraussetzung dafür, dass das Fahrzeug in die Informations-Infrastruktur des Unternehmens eingebunden werden kann, z.B. durch Zugriff auf E-Mails, Termine oder das Intranet. Weiterhin ermöglicht es das vorgestellte Verfahren, die "richtige" Konfiguration durch eine Fachabteilung für eine Vielzahl von Fahrzeugen zentral vornehmen zu lassen, so dass im Zuge wachsender Komplexität sich nicht mehr jeder Endnutzer komplett mit allen Funktionen und deren richtiger Konfiguration auseinandersetzen muss.

Das vorgestellte Verfahren unterstützt unter anderem die folgenden, exemplarisch ausgewählten Anwendungsfälle bzw. Anwendungsszenarien:

Ein erstes Anwendungsszenario betrifft die Konfiguration der Funktionen durch den Fuhrparkverwalter bzw. das IT-Management eines kundenseitigen Unternehmens:
Das vorgestellte Verfahren ermöglicht es, die Infotainment-Funktionen im Fahrzeug zentral, d.h. unternehmensweit, durch eine Fuhrparkverwaltung bzw. das IT-Management zu konfigurieren. Dadurch ist eine einheitliche Konfiguration über alle Fahrzeuge des Fuhrparks gewährleistet. Der Verwalter kann bei Bedarf die Konfiguration auch gegen Abändern sperren.

Ein zweites Anwendungsszenario betrifft die Konfiguration durch einen Diensteanbieter:
Das vorgestellte Verfahren ermöglicht es, dass ein dritter Diensteanbieter eine Konfiguration erstellen kann, die der Endnutzer dann im Fahrzeug aktivieren kann. So könnte beispielsweise ein Email-Anbieter (wie z.B. GOOGLE MAIL) eine Funktion anbieten, über die das Fahrzeug automatisch so konfiguriert wird, dass die Emails auch im Fahrzeug abrufbar sind. Der Fahrzeugnutzer kann die korrekte Konfiguration dann einfach in sein Fahrzeug importieren.

Ein drittes Anwendungsszenario betrifft die Sperrung von einzelnen Funktionen:
Ein kundenseitiges Unternehmen oder eine Mietwagenfirma kann für die eigenen Fahrzeuge Funktionen im Infotainment-Bereich sperren. So kann beispielsweise die maximale Lautstärke der Musik begrenzt werden, die Zieleingabe während der Fahrt verhindert oder eine Navigation in das Ausland verhindert werden. Über Richtlinien und Policies können die Funktionen individuell beschränkt werden. Die Mietwagenfirma kann so z.B. die Navigation oder das Fernsehen individuell freischalten, je nachdem welchen Tarif der Mietwagenkunde gebucht hat. Diese Möglichkeit besteht analog auch für den Fahrzeughersteller (z.B. Freischaltung der Navigation für einen bestimmten Zeitraum).

Ein viertes Anwendungsszenario betrifft die Nutzung von Sicherheitsrichtlinien:
Da das Infotainment-System des Fahrzeugs für geschäftliche Informationen, z.B. Emails oder Adressbuch genutzt werden kann, und diese Informationen normalerweise Sicherheitsrichtlinien des Unternehmens unterliegen, kann es von Nutzen sein, diese Sicherheitsrichtlinien technisch auch im Fahrzeug durchzusetzen. Das vorgestellte Verfahren ermöglicht dies, z.B. indem bestimmte Funktionen wie Daten-Exporte gesperrt werden, oder indem Vorgaben für die Nutzung gemacht werden, z.B. in Form eines Passwortschutzes von genügender Qualität oder die Bindung an einen bestimmten Fahrzeugschlüssel. Bei Bedarf können beispielsweise alle im Fahrzeug gespeicherten Daten automatisch gelöscht werden, wenn eine Sicherheitsrichtlinie verletzt wird. Zu den Sicherheitsrichtlinien kann z.B. auch die Beschränkung von Webseiten gehören, die der Endnutzer aufrufen darf.

Ein fünftes Anwendungsszenario betrifft ein so genanntes "Konfigurationen-Roaming":
Das vorgestellte Verfahren ermöglicht es darüber hinaus, die Konfiguration nicht an ein bestimmtes Fahrzeug zu binden, sondern an einen bestimmten Fahrzeugschlüssel oder eine bestimmte Person, die sich über Benutzername/Passwort, über ein CE-Gerät oder über sonstige Authentisierungsmittel authentisiert hat. So könnte beispielsweise eine individuelle Konfiguration dem Endnutzer stets in das Fahrzeug folgen, das er gerade nutzt.

## Patentansprüche

1. Verfahren zur Konfiguration von Infotainmentanwendungen in einem Kraftfahrzeug (10), mit den Schritten:
• Bereitstellen eines Kraftfahrzeugs (10) mit zumindest einer Infotainmentanwendung und mit einem Steuergerät, welches an der zumindest einen Infotainmentanwendung beteiligt ist,
• Bereitstellen einer Konfigurationsschnittstelle (11, 12, 13) des Steuergeräts, über welche das Steuergerät derart konfigurierbar ist, dass der Funktionsumfang und/oder eine Grundeinstellung der Infotainmentanwendung verändert wird,
• Bereitstellen eines bei dem Kraftfahrzeug angeordneten, gerätetechnisch von dem Steuergerät getrennten ersten Konfigurationsdatenservers (14) mit einer zugehörigen ersten Konfigurationsdatenbank zur fahrzeugbezogenen Speicherung von Konfigurationsdaten,
• Bereitstellen einer stationär entfernt von dem Kraftfahrzeug angeordneten Servicezentrale (20) mit einem dort angeordneten zweiten Konfigurationsdatenserver (22) und einer zweiten Konfigurationsdatenbank zur zentralen Speicherung von Konfigurationsdaten,
• Bereitstellen einer drahtlosen Kommunikationsverbindung (15, 21) zwischen dem ersten und dem zweiten Konfigurationsdatenserver,
• Bereitstellen einer ersten Modifikationsschnittstelle (23, 32), über welche Konfigurationsdaten der zweiten Konfigurationsdatenbank mit ersten Zugriffsrechten modifizierbar sind,
• Erkennen von Modifikationen der Konfigurationsdaten der zweiten Konfigurationsdatenbank,
• Verändern von Konfigurationsdaten der ersten Konfigurationsdatenbank über die drahtlose Kommunikationsverbindung anhand von Konfigurationsdaten aus der zweiten Konfigurationsdatenbank,
• Verändern des Funktionsumfangs und/oder einer Grundeinstellung der Infotainmentanwendung durch eine Konfiguration des Steuergeräts über die Konfigurationsschnittstelle des Steuergeräts anhand von Konfigurationsdaten aus der ersten Konfigurationsdatenbank,
**dadurch gekennzeichnet,**
**dass** die Servicezentrale von einem Fahrzeughersteller bzw. OEM betrieben wird, dass die erste Modifikationsschnittstelle für Modifikationen des Fahrzeugherstellers bzw. OEM verwendet wird und nicht internetbasiert ausgeführt ist,
**dass** eine zweite internetbasierte Modifikationsschnittstelle (24, 25, 41, 42, 51, 52, 61, 62) bereitgestellt wird, über welche Konfigurationsdaten der zweiten Konfigurationsdatenbank mit zweiten Zugriffsrechten, die sich von den ersten Zugriffsrechten unterscheiden, modifizierbar sind.

2. Verfahren nach Anspruch 1, **dadurch gekennzeichnet,**
**dass** eine auf die Verwaltung von Personal-Information-Management-Daten bezogene Grundeinstellung der Infotainmentanwendung verändert wird.

3. Verfahren nach einem der Ansprüche 1 oder 2, **dadurch gekennzeichnet,**
**dass** das Verändern des Funktionsumfangs und/oder der Grundeinstellung der Infotainmentanwendung nicht durch im Kraftfahrzeug verfügbare Bedienmittel durchführbar ist.

4. Verfahren nach einem der Ansprüche 1 bis 3, **dadurch gekennzeichnet**,
mit dem weiteren Schritt:
• Bereitstellen einer dritten intemetbasierten Modifikationsschnittstelle, über welche Konfigurationsdaten der zweiten Konfigurationsdatenbank mit dritten Zugriffsrechten, die sich von den ersten und zweiten Zugriffsrechten unterscheiden, modifizierbar sind,

5. Verfahren nach einem der Ansprüche 1 bis 4, **dadurch gekennzeichnet,**
**dass** das Verändern von Konfigurationsdaten der ersten Konfigurationsdatenbank in Antwort auf das Erkennen von Modifikationen der Konfigurationsdaten der zweiten Konfigurationsdatenbank erfolgt.

6. Verfahren nach einem der Ansprüche 1 bis 5, **dadurch gekennzeichnet,**
**dass** das Verändern des Funktionsumfangs und/oder einer Grundeinstellung der Infotainmentanwendung über die Konfigurationsschnittstelle des Steuergeräts in Antwort auf eine Veränderung von Konfigurationsdaten der ersten Konfigurationsdatenbank erfolgt.

7. Verfahren nach einem der Ansprüche 1 bis 6, **dadurch gekennzeichnet,**
**dass** bei der auf das Erkennen von Modifikationen der Konfigurationsdaten der zweiten Konfigurationsdatenbank folgenden Veränderung von Konfigurationsdaten der ersten Konfigurationsdatenbank nur ausgewählte Konfigurationsdaten der ersten Konfigurationsdatenbank verändert werden.

8. Verfahren nach einem der Ansprüche 1 bis 7, **dadurch gekennzeichnet,**
**dass** die Infotainmentanwendung ein Email-Client ist und
**dass** das Verändern des Funktionsumfangs und/oder der Grundeinstellung der Infotainmentanwendung in der Konfiguration des Email-Clients besteht.

9. Verfahren nach einem der Ansprüche 1 bis 8, **dadurch gekennzeichnet,**
**dass** über die drahtlose Kommunikationsverbindung Certificate Signing Requests oder sonstige konfigurations- und authentisierungsrelevante Daten durch den ersten Konfigurationsdatenserver beim zweiten Konfigurationsdatenserver hinterlegt werden.

10. Verfahren nach Anspruch 9, **dadurch gekennzeichnet,**
**dass** von dem Steuergerät bei der ihm zugeordneten Konfigurationsschnittstelle und/oder bei dem Konfigurationsdatenserver ein Certificate Signing Request hinterlegt wird.

## Claims

1. A method for configuring infotainment applications in a motor vehicle (10), comprising the steps:
• providing a motor vehicle (10) with at least one infotainment application and with a control unit, which is involved in the at least one infotainment application,
• providing a configuration interface (11, 12, 13) of the control unit, by means of which the control unit can be configured in such a way that the functional scope and/or a basic setting of the infotainment application is varied,
• providing a first configuration data server (14), which is arranged in the motor vehicle and separated in terms of equipment from the control unit, with an associated first configuration database for the storage of configuration data relating to the vehicle,
• providing a service centre (20) arranged stationarily remote from the motor vehicle, with a second configuration data server (22) arranged there and a second configuration database for central storage of configuration data,
• providing a wireless communication connection (15, 21) between the first and the second configuration data server,
• providing a first modification interface (23, 32), by means of which configuration data of the second configuration database can be modified using first access rights,
• recognising modifications of the configuration data of the second configuration database,
• changing configuration data of the first configuration database by means of the wireless communication connection with the aid of configuration data from the second configuration database,
• changing the functional scope and/or a basic setting of the infotainment application by a configuration of the control unit by means of the configuration interface of the control unit with the aid of configuration data from the first configuration database,
**characterised in that** the service centre is operated by a vehicle producer or OEM, **in that** the first modification interface is used for modifications of the vehicle producer or OEM and is not internet-based, **in that** a second internet-based modification interface (24, 25, 41, 42, 51, 52, 61, 62) is provided, by means of which configuration data of the second configuration database can be modified using second access rights, which differ from the first access rights.

2. A method according to claim 1, **characterised in that** a basic setting of the infotainment application relating to the management of personal information management data is changed.

3. A method according to either of claims 1 or 2, **characterised in that** the changing of the functional scope and/or the basic setting of the infotainment application cannot be carried out by operating means available in the motor vehicle.

4. A method according to any one of claims 1 to 3, **characterised by** the further step:
• providing a third internet-based modification interface, by means of which configuration data of the second configuration database can be modified using third access rights, which differ from the first and second access rights.

5. A method according to any one of claims 1 to 4, **characterised in that** the changing of configuration data of the first configuration database takes place in response to the recognition of modifications of the configuration data of the second configuration database.

6. A method according to any one of claims 1 to 5, **characterised in that** the changing of the functional scope and/or a basic setting of the infotainment application takes place by means of the configuration interface of the control unit in response to a change of configuration data of the first configuration database.

7. A method according to any one of claims 1 to 6, **characterised in that** during the change of configuration data of the first configuration database, which follows the recognition of modifications to the configuration data of the second configuration database, only selected configuration data of the first configuration database are changed.

8. A method according to any one of claims 1 to 7, **characterised in that** the infotainment application is an email client and **in that** the changing of the functional scope and/or the basic setting of the infotainment application comprises the configuration of the email client.

9. A method according to any one of claims 1 to 8, **characterised in that** by means of the wireless communication connection, certificate signing requests or other data relevant to configuration and authentication are stored by the first configuration data server at the second configuration data server.

10. A method according to claim 9, **characterised in that** a certificate signing request is stored by the control unit at the configuration interface assigned to it and/or at the configuration data server.

## Revendications

1. Procédé pour configurer des applications d'information-divertissement dans un véhicule (10) comportant les étapes consistant à :
• équiper un véhicule (10) d'au moins une application d'information-divertissement et d'un appareil de commande attribué à cette application d'information-divertissement,
• préparer une interface de configuration (11, 12, 13) de l'appareil de commande permettant de conformer cet appareil de sorte que le périmètre de fonctionnement et/ou le réglage de base de l'application d'information-divertissement soit modifié,
• préparer un premier serveur de données de configuration (14) monté dans le véhicule, techniquement séparé de l'appareil de commande et comportant une première banque de données de configuration propre pour permettre la mise en mémoire spécifique au véhicule de données de configuration,
• préparer une centrale de service (20) stationnaire montée à distance du véhicule et comportant un second serveur de données de configuration (22) monté dans cette centrale et une seconde banque de données de configuration pour permettre la mise en mémoire centralisée de données de configuration,
• préparer une liaison de communication sans fil (15, 21) entre le premier et le second serveur de configuration,
• préparer une première interface de modification (23, 32) permettant la modification de données de configuration de la seconde banque de données de configuration avec des premiers droits d'accès,
• reconnaître des modifications des données de configuration de la seconde banque de données de configuration,
• modifier des données de configuration de la première banque de données de configuration par l'intermédiaire de la liaison de communication sans fil à partir de données de configuration provenant de la seconde banque de données de configuration,
• modifier le périmètre de fonctionnement et/ou un réglage de base de l'application d'information-divertissement par une configuration de l'appareil de commande par l'intermédiaire de l'interface de confirmation de l'appareil de commande à partir de données de configuration provenant de la première banque de données de configuration, **caractérisé en ce que**
la centrale de service est actionnée par le fabricant ou constructeur du véhicule,
la première interface de modification est utilisée pour permettre des modifications par le fabricant ou constructeur du véhicule, et n'est pas actionnée à partir d'internet,
une seconde interface de modification (24, 25, 41, 42, 51, 52, 61, 62) basée sur internet est préparée, cette seconde interface de modification permettant de modifier des données de configuration de la seconde banque de données de configuration avec des seconds droits d'accès qui diffèrent des premiers droits d'accès.

2. Procédé conforme à la revendication 1,
**caractérisé en ce que**
le réglage de base de l'application d'information-divertissement spécifique à la gestion de données d'information-administration personnelles est modifié.

3. Procédé conforme à l'une des revendications 1 ou 2,
**caractérisé en ce que**
la modification du périmètre de fonctionnement et/ou du réglage de base de l'application d'information-divertissement ne peut pas être mise en oeuvre par des moyens d'actionnement mis à disposition dans le véhicule.

4. Procédé conforme à l'une des revendications 1 à 3,
**caractérisé par**
l'étape supplémentaire consistant à :
• préparer une troisième interface de modification basée sur Internet permettant de modifier des données de configuration de la seconde banque de données de configuration avec des troisièmes droits d'accès qui sont différents des premiers et des seconds droits d'accès.

5. Procédé conforme à l'une des revendications 1 à 4,
**caractérisé en ce que**
la modification de données de configuration de la première banque de données de configuration est effectuée en réponse à la reconnaissance de modification des données de configuration de la seconde banque de données de configuration.

6. Procédé conforme à l'une des revendications 1 à 5,
**caractérisé en ce que**
la modification du périmètre de fonctionnement et/ou d'un réglage de base de l'application d'information-divertissement est effectuée par l'intermédiaire de l'interface de configuration de l'appareil de commande en réponse à une modification de données de configuration de la première banque de données de configuration.

7. Procédé conforme à l'une des revendications 1 à 6,
**caractérisé en ce que**
lors de la modification de données de configuration de la première banque de données de configuration suivant la reconnaissance de modifications de données de configuration de la seconde banque de données de configuration, ne sont modifiées que des données de configuration choisies de la première banque de données de configuration.

8. Procédé conforme à l'une des revendications 1 à 7,
**caractérisé en ce que**
l'application d'information-divertissement est un e-mail client et la modification du périmètre de fonctionnement et/ou du réglage de base de l'application d'information-divertissement consiste en la configuration de l'e-mail client.

9. Procédé conforme à l'une des revendications 1 à 8,
**caractérisé en ce que**
la liaison de communication sans fil, permet de dépôt de requête de signature de certificats ou d'autres données importantes pour la configuration et l'authentification dans le second serveur de données de configuration par l'intermédiaire du premier serveur de données de configuration.

10. Procédé conforme à la revendication 9,
**caractérisé en ce qu'**
une requête de signature de certificat est déposée par l'appareil de commande dans l'interface de configuration qui lui est associée et/ou dans le serveur de données de configuration.
